# EUROPEAN PATENT APPLICATION

(11) **EP 1 551 128 A1**
(43) Date of publication of application: **06.07.2005**
(21) Application number: 03755693.3
(22) Date of filing: 06.10.2003
(51) Int. Cl.: H04L 7/00, H04N 5/93

(54) **DATA TRANSMISSION PROCESSING DEVICE AND PROGRAM**

(30) Priority: 07.10.2002 JP 2002293668
(71) Applicant: MATSUSHITA ELECTRIC INDUSTRIAL CO., LTD., Kadoma-shi, Osaka 571-8501 (JP)
(72) Inventor: SEKINE, Fukutarou, Yokohama-shi, Kanagawa 224-0054 (JP); MIYAZAKI, Akihiro, Sakai-shi, Osaka 591-8032 (JP); ONO, Tadashi, Osaka-shi, Osaka 540-0012 (JP); MAEDA, Shigenori, Katano-shi, Osaka 576-0021 (JP); TAKAKI, Toshimasa, Ota-ku, Tokyo 144-0046 (JP); VOGLER, Joerg, D65239 Hochheim (DE); PFEIFFER, Gerald, D63741 Aschaffenburg (DE)
(74) Representative: Grünecker, Kinkeldey, Stockmair & Schwanhäusser Anwaltssozietät
(86) International application number: PCT/JP2003/012787
(87) International publication number: WO 2004/032406

(57) **Abstract**

It is an object of the invention to time independent common times for a plurality of processing system groups, respectively. It is another object of the invention to take a synchronization in the vicinity of the start of reproduction also when a difference is made over a time taken to prepare for the processing of each processing system. Counting unit (12) manages the common times of a plurality of processing system groups (16) and (17) to time a common time for each of the processing system groups, and time supply unit (13) supplies the common time obtained by the counting of the counting unit (12) to each of processing systems (161), (162), (171) and (172). Moreover, counting control unit (14) controls to start and stop the counting based on notices given from the processing systems (161), (162), (171) and (172) of the processing system groups (16) and (17). The processing system groups (16) and (17) carry out synchronous data transmission processings with each other based on the common time supplied from the counting supply unit (13) in relation to data received from data supply unit (151) and (152). Then, the data transmitted synchronously are reproduced in data reproducing unit (181) and (182).

## Description

### <TECHNICAL FIELD>

The present invention relates to a data transmission processing apparatus and program for synchronizing data on various media such as a video, a sound and a text and carrying out a transmission processing such as reproduction or recording.

### <BACKGROUND ART>

Conventionally, the data transmission processing apparatus of this type has been constituted to reproduce one reproducing information or more which is/are stored in a storage unit in synchronization with a single clock signal (for example, see Patent Document 1). Moreover, some apparatuses have such a structure that the reproducing start time of each media element is previously specified and reproduction is started upon receipt of all of the display preparation completion notices of a media element group to be started to be reproduced earliest (for example, see Patent Document 2).

### [Patent Document 1]

JP-A-2001-356767

### [Patent Document 2]

JP-A-6-243058

In the conventional data transmission processing apparatus described above, however, when each processing system is to prepare for a processing at the start of the processing, a difference is usually made over a time required to prepare for the processing. For this reason, there is a problem in that a synchronization cannot be taken in the vicinity of the start of the reproduction if counting is started corresponding to a processing system completing the preparation early. In the case in which there is a processing system taking a considerable time for the preparation of the processing when the counting is started corresponding to a processing system taking the longest time for the preparation, there is a problem in that the start of the counting is delayed or the counting cannot be started.

In the case in which there is a plurality of processing system groups having different common times from each other, moreover, there is a problem in that a plurality of common times cannot be independently counted respectively or a start and a stop cannot be controlled.

In the case in which one of a plurality of processing systems becomes disabled when the processing systems carry out the data transmission processing synchronously, moreover, there is a problem in that the continuation of the synchronous transmission processings cannot be subsequently carried out.

In an apparatus having a plurality of processing systems corresponding to various media such as a video, a voice and a text, thus, it has conventionally been hard to carry out a data transmission processing to perform reproduction or recording while taking a synchronization properly corresponding to the processing operations of the respective processing systems.

The invention has been made to solve the problems and has an object to provide a data transmission processing apparatus and program in which each processing system can synchronously start a processing and can count a common time also in the case in which a difference is made over a time taken to prepare for the processing of each processing system.

Moreover, it is an object of the invention to provide a data transmission processing apparatus and program which can independently count a plurality of common times corresponding to each processing system group and can control a start and a stop in the case in which a plurality of processing system groups having different common times is present.

Furthermore, it is an object of the invention to provide a data transmission processing apparatus and program which can continuously carry out a synchronous transmission processing by automatically stopping counting when one of a plurality of processing systems becomes disabled and restarting the counting when the processing system becomes enabled again while the processing systems synchronously perform a data transmission processing.

### <DISCLOSURE OF THE INVENTION>

A data transmission processing apparatus according to the invention serves to process a plurality of data in parallel and to synchronously carry out a transmission processing, including a plurality of processing systems for independently processing the data, and a plurality of processing system groups to be a set of any of the processing systems which is operated at a common time, a counting unit for counting a plurality of common times corresponding to the respective processing system groups, time supply unit for supplying the common time obtained by the counting of the counting unit to all of the processing systems belonging to the corresponding processing system group, and counting control unit for starting to count the common time corresponding to one of the processing system groups by the counting unit when receiving a transmission processing preparation completion notice from all of the processing systems belonging to the same processing system group.

By this structure, in the case in which a plurality of processing system groups having different common times from each other is present, it is possible to independently start to count the respective common times and to supply the common times to the corresponding processing system groups. Also in the case in which a difference is made over a time taken to prepare for the processing of each processing system belonging to one of the processing system groups, moreover, the common time of one of the processing system groups is started to be counted by the counting unit when all of the processing systems belonging to the same processing system group complete the preparation for the transmission processing, and the time supply unit supplies the times thus obtained to all of the processing systems belonging to the same processing system group. Consequently, all of the processing systems belonging to one processing system group can synchronously carry out a data processing related to a data transmission.

In the case in which a transmission processing preparation uncompleted processing system which has not received a transmission processing preparation completion notice is present in the processing systems, moreover, the counting control unit starts the counting of the common time corresponding to a processing system group including one of the processing systems completing a transmission processing preparation by the counting unit when receiving a notice that data stored in a data holding region reach a predetermined constant amount from the same processing system upon receipt of the transmission processing preparation completion notice.

By this structure, when each processing system is to prepare for a processing at the start of the data transmission processing, it is possible to start the counting of a common time related to the data transmission processing without using up the data holding region of one processing system even if there is a processing system taking a considerable time to prepare for the processing.

Furthermore, the counting control unit starts the counting of the common time corresponding to a processing system group to be an object by the counting unit when it does not receive any notice from all of the processing systems for a predetermined period of time in the case in which a processing system completing a transmission processing preparation upon receipt of the transmission processing preparation completion notice is present and a transmission processing preparation uncompleted processing system which has not received the transmission processing preparation completion notice is present.

By this structure, when each processing system is to prepare for the data transmission processing at the start of the processing, it is possible to count a common time related to the data transmission processing without remarkably delaying the start even if there is a processing system taking a considerable time to prepare for a processing.

Moreover, the counting control unit stops the counting of the common time to be an object by the counting unit when a notice of transmission processing disabled is given from one of the processing systems during a transmission processing, and restarts the counting of the common time to be the object by the counting unit when a notice of transmission processing enabled is given from the same processing system again while the time supply unit supplies the common time to the respective processing systems.

By this structure, it is possible to restart the synchronous data transmission processing by automatically stopping the counting if one of the processing systems becomes disabled and restarting the counting if the processing system becomes enabled again when the processing systems synchronously carry out the data transmission processing.

Furthermore, it is assumed that a data processing in the processing system is a transmission processing intended for reproducing the data. Alternatively, it is assumed that a data processing in the processing system is a transmission processing intended for recording the data.

By this structure, in the transmission processing intended for reproducing the data or the transmission processing intended for recording the data, the common time can be counted independently for each processing system group. Thus, all of the processing systems in the processing system group can synchronously carry out the processings.

Moreover, the invention provides a data transmission processing program for causing each function of all or a part of components of any of the data transmission processing apparatuses described above to be executed by a computer.

By this program, it is possible to implement each unit of the data transmission processing apparatus by using the computer.

### <BRIEF DESCRIPTION OF THE DRAWINGS>

Fig. 1 is a block diagram showing the structure of a data transmission processing apparatus according to a first embodiment of the invention;
Fig. 2 is a flowchart showing an operation to be carried out when the data transmission processing apparatus according to the first embodiment starts counting;
Fig. 3 is a flowchart showing an operation to carried out when the data transmission processing apparatus according to the first embodiment performs a data transmission processing synchronously with a common time;
Fig. 4 is a block diagram showing the structure of a data transmission processing apparatus according to a second embodiment of the invention;
Fig. 5 is a flowchart showing an operation to be carried out when the data transmission processing apparatus according to the second embodiment starts counting;
Fig. 6 is a block diagram showing the structure of a data transmission processing apparatus according to a third embodiment of the invention;
Fig. 7 is a flowchart showing an operation to be carried out when the data transmission processing apparatus according to the third embodiment starts counting;
Fig. 8 is a block diagram showing the structure of a data transmission processing apparatus according to a fourth embodiment of the invention; and
Fig. 9 is a flowchart showing an operation to be carried out when the data transmission processing apparatus according to the fourth embodiment stops and restarts the counting of a common time during a data transmission processing.

In the drawings, 1, 2, 3 and 4 denote a data transmission processing apparatus, 11 denotes a clock supply unit, 12 denotes a counting unit, 13 denotes a time supply unit, 14 denotes a counting control unit, 151 and 152 denote a data supply unit, 16 and 17 denote a processing system group, 161, 162, 171 and 172 denote a processing system, 181 and 182 denote a data reproducing unit, 21 denotes a buffer filling counting start unit, 31 denotes a time-out counting start unit, and 41 denotes a counting temporary stop unit.

### <BEST MODE FOR CARRYING OUT THE INVENTION>

Embodiments of the invention will be described below with reference to the drawings.

As an example of a data transmission processing apparatus according to the invention, description will be given to the structure and operation of a data transmission processing apparatus for carrying out a processing of transmitting data on various media such as a video, a voice and a text. A data transmission processing program according to the invention can cause each procedure of an operation in the data transmission processing apparatus to be executed by a computer, and is included in the explanation of an operation according to the embodiment.

### (FIRST EMBODIMENT)

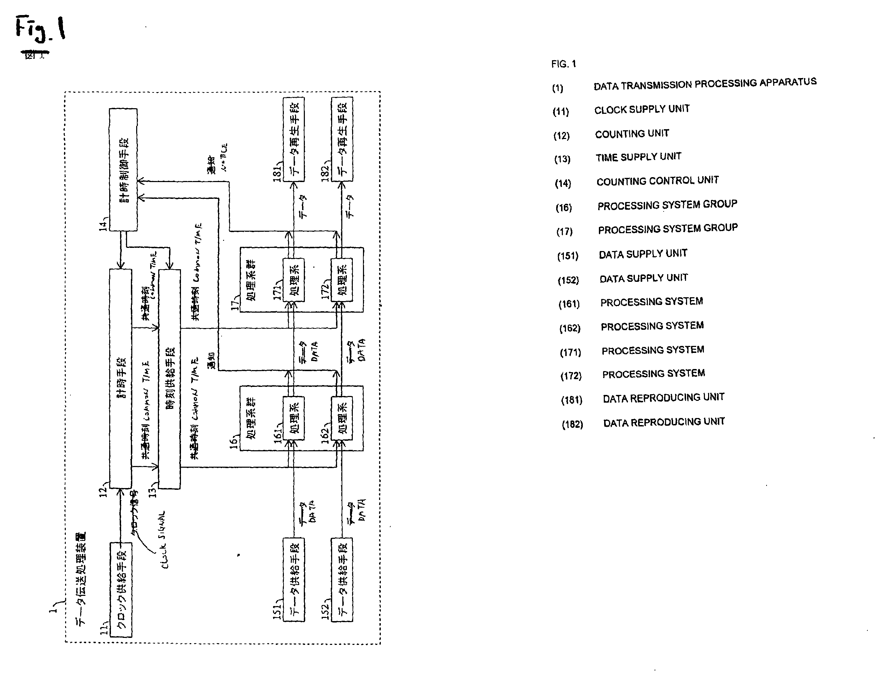

Fig. 1 is a block diagram showing the structure of a data transmission processing apparatus according to a first embodiment of the invention. Fig. 1 shows the functional structure of a main part in the data transmission processing apparatus.

A data transmission processing apparatus 1 according to the first embodiment has a clock supply unit 11 for supplying a clock signal, a counting unit 12 for counting a common time for each processing system group, a time supply unit 13 for supplying the common time obtained by the counting of the counting unit 12 to each processing system, a counting control unit 14 for controlling the start of counting for the counting unit 12 and the time supply unit 13, data supply units 151 and 152 for supplying data on various media such as a video, a voice and a text, processing system groups 16 and 17 for synchronously carrying out a plurality of data transmission processings based on the common time supplied from the time supply unit 13, and data reproducing units 181 and 182 for reproducing the data.

Moreover, the processing system group 16 has a plurality of processing systems 161 and 162 for carrying out a data transmission processing synchronously with a first common time, and the processing system group 17 has a plurality of processing systems 171 and 172 for carrying out a data transmission processing synchronously with a second common time.

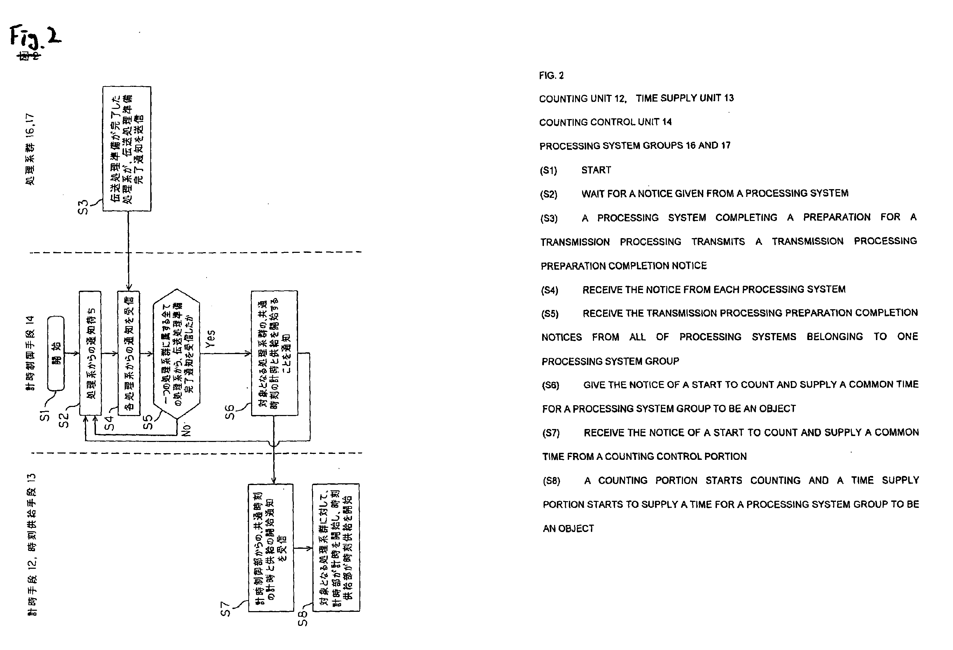

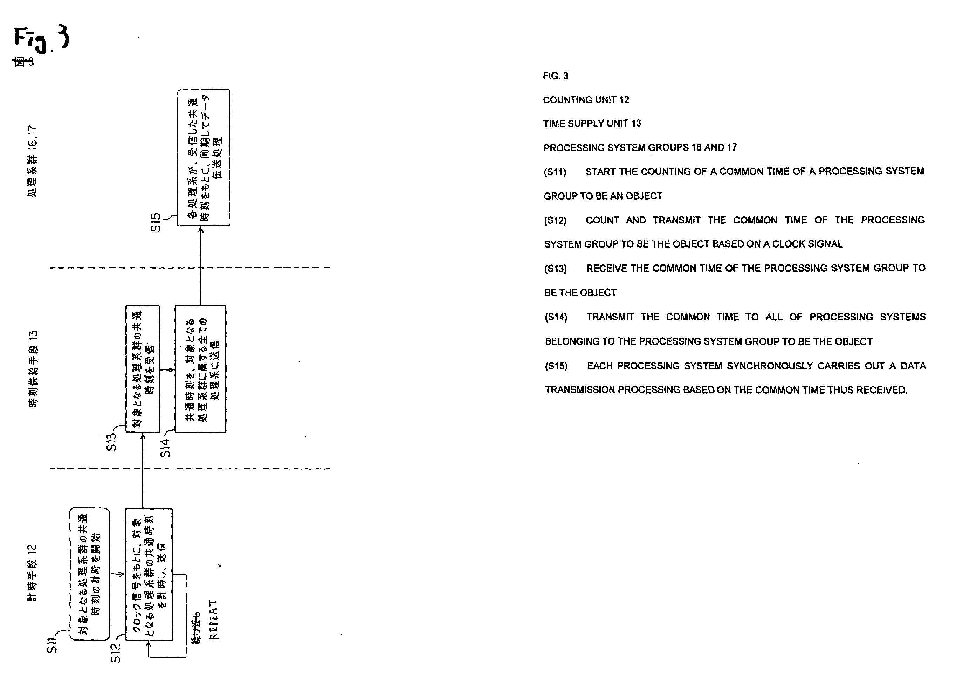

The operation of the data transmission processing apparatus having the structure described above will be described with reference to Figs. 2 and 3.

Fig. 2 is a flowchart showing an operation to be carried out when the data transmission processing apparatus 1 starts counting, and Fig. 3 is a flowchart showing an operation to be carried out when the data transmission processing apparatus 1 performs a data transmission processing synchronously with a common time.

As shown in Fig. 2, first of all, the counting control unit 14 starts an operation at a step S1 and then accepts a notice from each processing system at a step S2. The processing system groups 16 and 17 completing a preparation for a processing transmit transmission processing completion notices to the counting control unit 14 at a step S3. At a step S4, the counting control unit 14 receives a notice from each processing system. At a step S5, then, the counting control unit 14 decides whether or not transmission processing completion notices are received from all of the processing systems belonging to the processing system group 16 or all of the processing systems belonging to the processing system group 17.

If the decision of the step S5 is true, the notice of a start to count and supply a common time for the processing system group to be an object is given to the counting unit 12 and the time supply unit 13 at a step S6. If the decision of the step S5 is false, moreover, the processing returns to the step S2 in which the notice is waited to be given from the processing system. The counting unit 12 and the time supply unit 13 start to count and supply a common time for the processing system group to be an object at a step S8 upon receipt of the notice of a start to count and supply the common time at a step S7.

A subsequent operation will be described with reference to Fig. 3. The counting unit 12 starts to count the common time of the processing system group to be an object at a step S11, and the common time of the processing system group to be an object is then timed and is transmitted to the time supply unit 13 based on a clock received from the clock supply unit 11 at a step S12. Subsequently, the counting unit 12 repeats the operation of the step S12. The time supply unit 13 receives the common time of the processing system group to be the object from the counting unit 12 at a step S13 and supplies the common time to all of the processing systems belonging to the processing system group to be the object at a step S14.

At a step S15, a data transmission processing is synchronously carried out based on the common time received by each processing system in the following manner. The processing system 161 and the processing system 162 in the processing system group 16 receive data from the data supply unit 151 and the data supply unit 152 respectively and carry out a data transmission processing synchronously with the common time supplied from the time supply unit 13, and transmit data to the processing system 171 and the processing system 172 in the processing system group 17 respectively. Moreover, the processing system 171 and the processing system 172 in the processing system group 17 receive data from the processing system 161 and the processing system 162 respectively and carry out a data transmission processing synchronously with the common time supplied from the time supply unit 13, and transmit data to the data reproducing unit 181 and the data reproducing unit 182 respectively. Then, the data transmitted synchronously are reproduced in the data reproducing unit 181 and the data reproducing unit 182.

According to the data transmission processing apparatus according to the first embodiment of the invention, there is provided the counting control unit for starting to count a common time when receiving a transmission processing preparation completion notice from all of processing systems belonging to a certain processing system group. Also in the case in which a difference is made over a time taken to prepare for the processing of each processing system, consequently, the counting unit starts to count the common time when all of the processing systems complete a preparation for a transmission processing and the time supply unit supplies the time thus obtained to each processing system so that each processing system can synchronously carry out a data transmission processing.

Moreover, there is provided the counting unit for independently counting common times corresponding to a plurality of processing system groups. In the case in which a plurality of processing system groups having different common times from each other is present, therefore, respective common times can be started to be counted independently and each of the common times can be supplied to the corresponding processing system group.

### (SECOND EMBODIMENT)

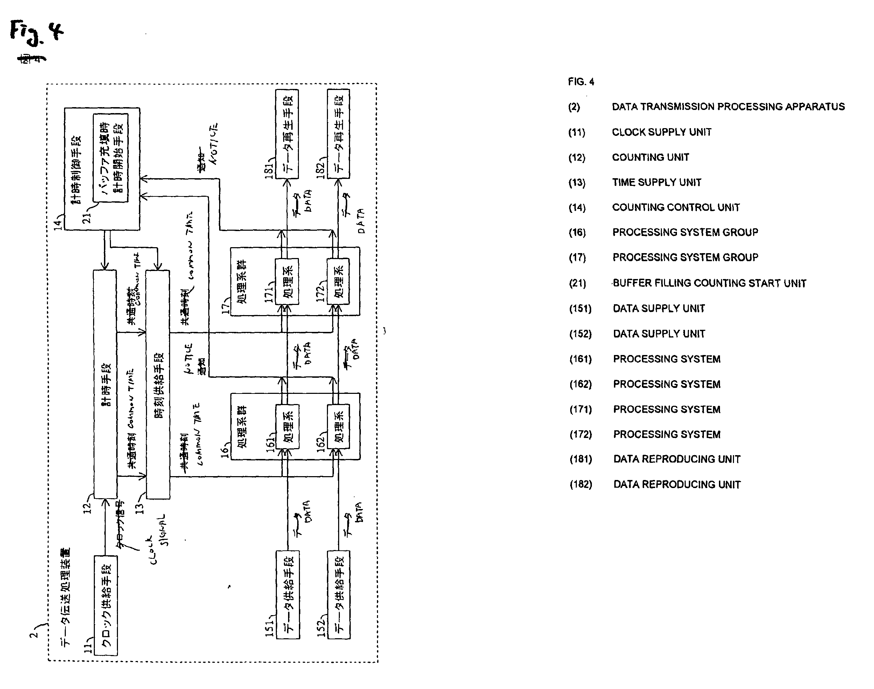

Fig. 4 is a block diagram showing the structure of a data transmission processing apparatus according to a second embodiment of the invention. Fig. 4 shows the functional structure of a main part in the data transmission processing apparatus.

A data transmission processing apparatus 2 according to the second embodiment is different from the first embodiment described above in that the buffer filling counting start unit 21 is provided in the counting control unit 14 in addition to the structure of the data transmission processing apparatus 1 shown in Fig. 1. The same components as those in the first embodiment have the same reference numerals and description will be omitted.

The buffer filling counting start unit 21 is a counting start unit for starting to count and supply the common time of a processing system group to which a certain processing system belongs when a notice that the data holding region of the same processing system reaches a predetermined constant amount is received, that is, a buffer is brought into a filling state.

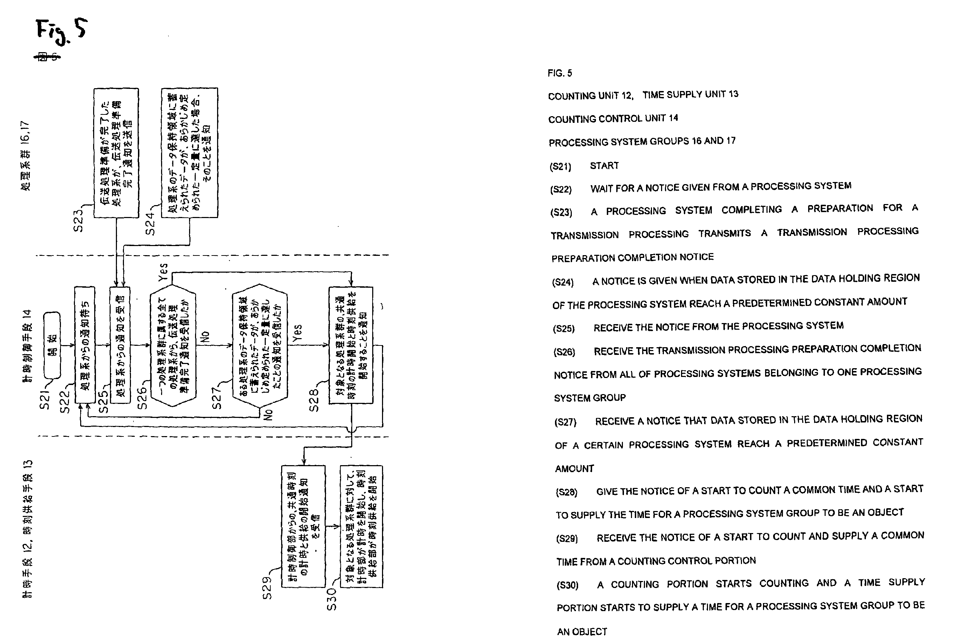

The operation of the data transmission processing apparatus having the above structure will be described with reference to Fig. 5.

Fig. 5 is a flowchart showing an operation to be carried out when the data transmission processing apparatus 2 starts to carry out the counting.

As shown in Fig. 5, first of all, the counting control unit 14 starts an operation at a step S21 and then accepts a notice from each processing system at a step S22. Processing system groups 16 and 17 transmit a transmission processing completion notice to the counting control unit 14 at a step S23 when a preparation for a transmission processing is completed. Moreover, the processing system groups 16 and 17 give a notice to the counting control unit 14 at a step S24 if data stored in a data holding region reach a predetermined constant amount.

The counting control unit 14 receives a notice from each processing system at a step S25. At a step S26, then, the counting control unit 14 decides whether or not the transmission processing completion notice is received from all of processing systems belonging to the processing system group 16 or all of processing systems belonging to the processing system group 17. If the decision of the step S26 is true, the notice of a start to count and supply a common time for a processing system group to be an object is given to the counting unit 12 and the time supply unit 13 at a step S28 and the processing returns to the step S22. If the decision of the step S26 is false, moreover, the processing proceeds to a step S27.

At the step S27, it is decided whether or not the buffer filling counting start unit 21 in the counting control unit 14 receives a notice that data stored in the data holding region of a certain processing system reach a predetermined constant amount. If the decision of the step S27 is true, the notice of a start to count and supply a common time for a processing system group including the same processing system is given to the counting unit 12 and the time supply unit 13 also when a processing system which has not completed a preparation for a processing is present in the same processing system group. If the decision of the step S27 is false, the processing returns to the step S22.

The counting unit 12 and the time supply unit 13 start to count and supply a common time for a processing system group to be an object at a step S30 upon receipt of the notice of the start to count and supply the common time at a step S29.

Subsequently, a data transmission processing which is synchronous with a common time is carried out in accordance with the procedure described with reference to Fig. 3 in the first embodiment.

According to the data transmission processing apparatus in accordance with the second embodiment of the invention, there is provided the counting control unit for starting the counting upon receipt of a notice that data stored in a data holding region reach a predetermined constant amount from any of processing systems completing a preparation for a transmission processing when a processing system which has not completed the preparation for the transmission processing is present. When each processing system is to prepare for a processing at the start of a data transmission processing, consequently, it is possible to start to count the data transmission processing without using up the data holding region of one processing system also in the case in which a processing system taking a considerable time to prepare for a processing is present.

### (THIRD EMBODIMENT)

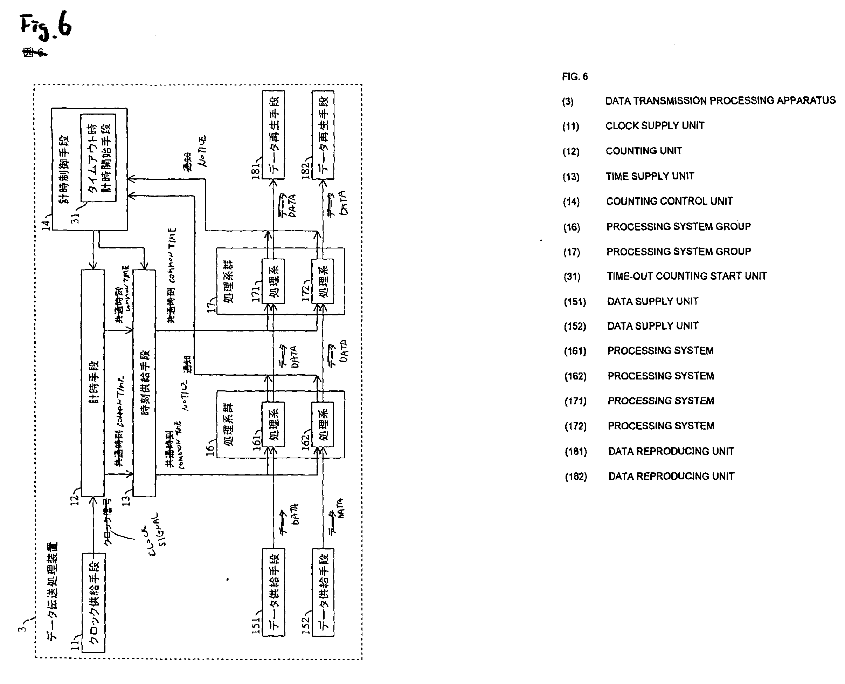

Fig. 6 is a block diagram showing the structure of a data transmission processing apparatus according to a third embodiment of the invention. Fig. 6 shows the functional structure of a main part in the data transmission processing apparatus.

A data transmission processing apparatus 3 according to the third embodiment is different from the first embodiment described above in that time-out counting start unit 31 is provided in counting control unit 14 in addition to the structure of the data transmission processing apparatus 1 shown in Fig. 1. The same components as those in the first embodiment have the same reference numerals and description will be omitted.

The time-out counting start unit 31 is counting start unit for starting to count and supply the common time of a certain processing system group when any notice is not received from all of processing systems for a predetermined constant period of time, that is, a predetermined time passes to bring a time-out in the case in which a processing system completing a preparation for a transmission processing is present and a processing system which has not completed the preparation for a transmission processing is present in the same processing system group.

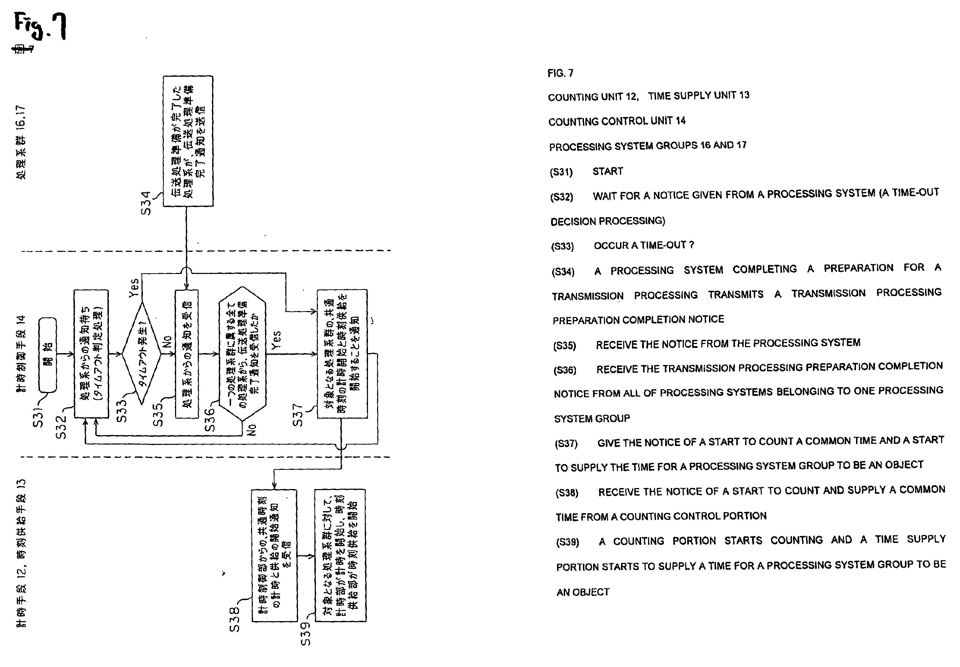

The operation of the data transmission processing apparatus having the above structure will be described with reference to Fig. 7.

Fig. 7 is a flowchart showing an operation to be carried out when the data transmission processing apparatus 3 starts to carry out the counting.

As shown in Fig. 7, first of all, the counting control unit 14 starts an operation at a step S31 and then accepts a notice from each processing system at a step S32. Moreover, the decision of a time-out is carried out by the time-out counting start unit 31 while the counting control unit 14 accepts a notice from each processing system at the step S32, and it is decided whether or not the time-out is generated at a step S33.

When a preparation for a transmission processing is completed, processing system groups 16 and 17 transmit a transmission processing completion notice to the counting control unit 14 at a step S34. If the time-out is not generated at the step S33, the counting control unit 14 receives a notice from each processing system at a step S35. At a step S36, then, the counting control unit 14 decides whether or not the transmission processing completion notice is received from all of processing systems belonging to the processing system group 16 or all of processing systems belonging to the processing system group 17.

If the decision of the step S36 is true, the notice of a start to count and supply a common time for a processing system group to be an object is given to counting unit 12 and time supply unit 13 at a step S37. If the decision of the step S36 is false, moreover, the processing returns to the step S32 in which the notice is waited to be given from the processing system.

If the time-out is generated at the step S33, that is, a predetermined constant time passes without any notice received from a processing system belonging to a certain processing system group when there is any of processing systems belonging to the same processing system group which has completed a preparation for a processing, moreover, the processing proceeds to the step S37 in which the notice of a start to count and supply a common time for the same processing system group is given to the counting unit 12 and the time supply unit 13.

The counting unit 12 and the time supply unit 13 start to count and supply a common time for a processing system group to be an object at a step S39 upon receipt of the notice of the start to count and supply the common time at a step S38.

Subsequently, a data transmission processing which is synchronous with a common time is carried out in accordance with the procedure described with reference to Fig. 3 in the first embodiment.

According to the data transmission processing apparatus in accordance with the third embodiment of the invention, there is provided the counting control unit for starting to count a common time to be an object when any notice is not received from all of processing systems for a predetermined constant period of time in the case in which a processing system completing a preparation for a transmission processing is present and a processing system which has not completed the preparation for a transmission processing is present in a processing group. When each processing system is to prepare for a processing at the start of a data transmission processing, consequently, it is possible to carry out the counting without remarkably delaying the start also in the case in which a processing system taking a considerable time to prepare for a processing is present.

### (FOURTH EMBODIMENT)

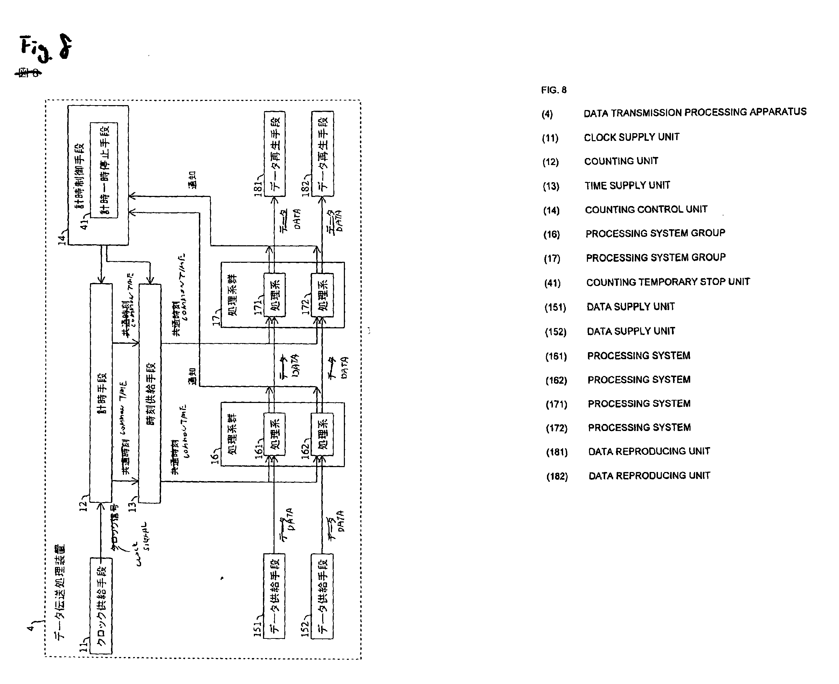

Fig. 8 is a block diagram showing the structure of a data transmission processing apparatus according to a fourth embodiment of the invention. Fig. 8 shows the functional structure of a main part in the data transmission processing apparatus.

A data transmission processing apparatus 4 according to the fourth embodiment is different from the first embodiment described above in that the counting temporary stop unit 41 is provided in the counting control unit 14 in addition to the structure of the data transmission processing apparatus 1 shown in Fig. 1. The same components as those in the first embodiment have the same reference numerals and description will be omitted.

The counting temporary stop unit 41 serves to stop the counting of the common time of a processing system group to which one of processing systems during a transmission processing belongs when the notice of transmission processing disabled is given from the same processing system and to restart the counting of the common time of the processing system group to which the same processing system belongs when the notice of transmission processing enabled is given from the processing system again.

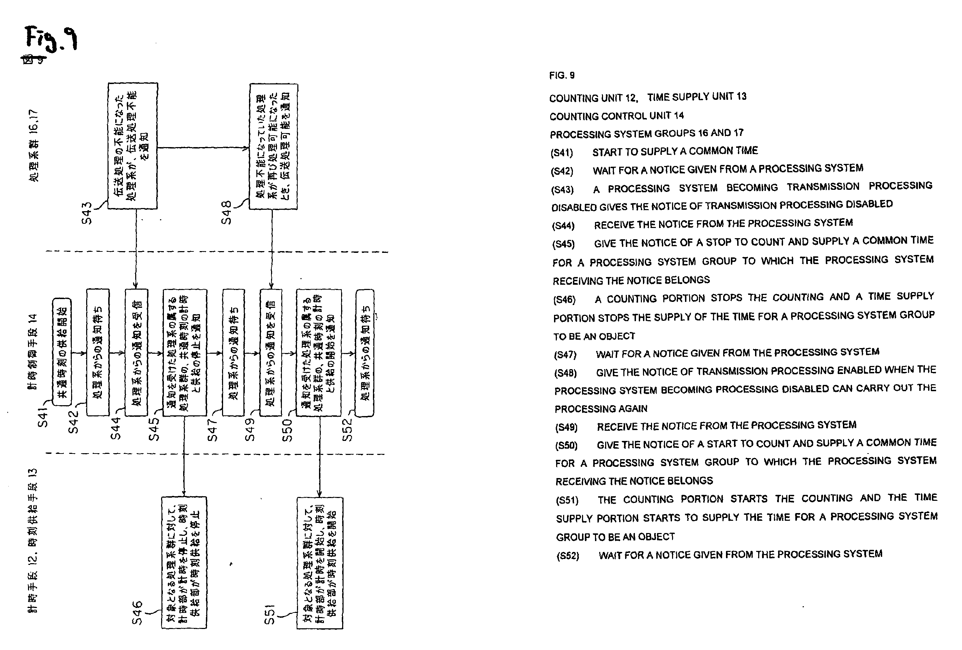

The operation of the data transmission processing apparatus having the above structure will be described with reference to Fig. 9.

Fig. 9 is a flowchart showing an operation for the data transmission processing apparatus 4 to stop the counting of a common time when one of the processing systems becomes processing disabled during a transmission processing and to then restart the counting of the common time when the processing system which is processing disabled is caused to be processing enabled again.

First of all, the counting of a common time is started to carry out a synchronous data transmission processing by the method described with reference to Figs. 2 and 3 in the first embodiment.

Next, the counting is controlled by a method shown in Fig. 9. As shown in Fig. 9, the counting control unit 14 starts the supply of a common time at a step S41 and then accepts a notice from each processing system at a step S42. In processing system groups 16 and 17, in the case in which one of processing systems becomes transmission processing disabled when each of the processing systems carries out a transmission processing, the same processing system gives the notice of transmission processing disabled to the counting control unit 14 at a step S43. When the notice of transmission processing disabled is given from one of the processing systems at a step S44, the counting temporary stop unit 41 in the counting control unit 14 gives counting unit 12 and time supply unit 13 the notice of a stop to count and supply the common time for a processing system group to which the same processing system belongs at a step S45.

When receiving the notice of a stop to count and supply the common time from the counting control unit 14, the counting unit 12 and the time supply unit 13 stop the counting and supply of the common time for a processing system group to be an object at a step S46.

Then, the counting control unit 14 accepts a notice from the processing system again at a step S47. In the processing system groups 16 and 17, in the case in which the processing system which is transmission processing disabled becomes transmission processing enabled again, the same processing system gives the counting control unit 14 the notice of transmission processing enabled at a step S48. In the case in which the notice of transmission processing enabled is given from the processing system which is transmission processing disabled at a step S49, the counting temporary stop unit 41 in the counting control unit 14 gives the counting unit 12 and the time supply unit 13 the notice of a restart to count and supply the common time for the processing system group to which the same processing system belongs at a step S50.

When receiving the notice of a restart to count and supply the common time from the counting control unit 14, the counting unit 12 and the time supply unit 13 start the counting and supply of the common time for the processing system group to be an object at a step S51. Then, a data transmission processing which is synchronous with the common time is carried out in accordance with the procedure described with reference to Fig. 3 in the first embodiment.

According to the data transmission processing apparatus according to the fourth embodiment of the invention, there is provided the counting control unit for stopping the counting when the notice of transmission processing disabled is given from one of the processing systems during a transmission processing and for restarting the counting when the notice of transmission processing enabled is given from the same processing system again while the time supply unit supplies a common time to each of the processing systems. When a plurality of processing systems synchronously carries out the data transmission processing, consequently, the counting is automatically stopped if one of the processing systems becomes processing disabled, and the counting is restarted if the processing system becomes processing enabled again. Consequently, it is possible to restart the synchronous data transmission processing.

The invention is not limited to the embodiments described above but can be executed in various manners without departing from the scope thereof.

For instance, while the description has been given to the example in which the data transmission processing apparatus is constituted by two processing system groups, each of which has two processing systems in each of the embodiments, it is not limited but the data transmission processing apparatus may be constituted by a single processing system group having a plurality of processing systems, or three processing system groups or more.

While the description has been given to the data transmission processing apparatus having such a structure as to carry out reproduction by the data reproducing unit in each of the embodiments, moreover, it is also possible to employ a structure in which recording is carried out by the data recording unit. Referring to data on various media such as a video, a sound and a text, moreover, it is possible to apply to any structure having a processing system to utilize the synchronous transmission of a plurality of data.

While the invention has been described in detail with reference to specific embodiments, it is apparent to the skilled in the art that various changes and modifications can be made without departing from the spirit and scope of the invention.

The application is based on Japanese Patent Application No. 2002-293668 filed on October 7, 2002 and contents thereof are incorporated herein by reference.

### <Industrial Applicability>

As described above, according to the invention, it is possible to provide a data transmission processing apparatus and program in which each processing system can synchronously start a processing to carry out counting for a common time even if a difference is made over a time taken to prepare for the processing of the processing system.

Moreover, it is possible to provide a data transmission processing apparatus and program which can independently time a plurality of common times corresponding to processing system groups and can control a start and a stop in the case in which a plurality of processing system groups having different common times is present.

Furthermore, it is possible to provide a data transmission processing apparatus and program which can continuously carry out a synchronous transmission processing by automatically stopping counting if one of a plurality of processing systems becomes processing disabled and restarting the counting if the processing system becomes processing enabled again when the processing systems synchronously perform a data transmission processing.

## Claims

1. A data transmission processing apparatus for processing a plurality of data in parallel and synchronously carrying out a transmission processing, comprising:
a plurality of processing systems which independently process the data, and a plurality of processing system groups having a set of any of the processing systems which is operated at a common time in the processing systems;
a counting unit which counts a plurality of common times corresponding to the respective processing system groups;
a time supply unit which supplies the common time obtained by the counting of the counting unit to all of the processing systems belonging to the corresponding processing system group; and
a counting control unit which starts to count the common time corresponding to one of the processing system groups by the counting unit when receiving transmission processing preparation completion notices from all of the processing systems belonging to the same processing system group.

2. The data transmission processing apparatus as set forth in claim 1, wherein in the case that a transmission processing preparation uncompleted processing system which has not received the transmission processing preparation completion notice is present in the processing systems, the counting control unit starts the counting of the common time corresponding to the processing system group including one of the processing systems completing a transmission processing preparation by the counting unit when receiving a notice that data stored in a data holding region reach a predetermined constant amount from the same processing system upon receipt of the transmission processing preparation completion notice.

3. The data transmission processing apparatus as set forth in claim 1, wherein the counting control unit starts the counting of the common time corresponding to the processing system group to be an object by the counting unit when the counting control unit does not receive any notice from all of the processing systems for a predetermined period of time in the case that a processing system completing a transmission processing preparation upon receipt of the transmission processing preparation completion notice is present and a transmission processing preparation uncompleted processing system which has not received the transmission processing preparation completion notice is present.

4. The data transmission processing apparatus as set forth in claim 1, wherein the counting control unit stops the counting of the common time to be an object by the counting unit when the counting control unit receives a transmission processing disable notice from any one of the processing systems during a transmission processing while the time supply unit supplies the common time to the respective processing systems; and
wherein the counting control unit restarts the counting of the common time to be the object by the counting unit when the counting control unit receives a transmission processing enable notice from the same processing system again while the time supply unit supplies the common time to the respective processing systems.

5. The data transmission processing apparatus as set forth in any one of claims 1 to 4, wherein a data processing in the processing system is a transmission processing for reproducing the data.

6. The data transmission processing apparatus as set forth in any one of claims 1 to 4, wherein a data processing in the processing system is a transmission processing for recording the data.

7. A data transmission processing program for causing each function of all or a part of components of the data transmission processing apparatus according to any one of claims 1 to 6 to be executed by a computer.
